# EUROPÄISCHE PATENTSCHRIFT

(11) **EP 0 577 999 B1**
(45) Veröffentlichungstag und Bekanntmachung des Hinweises auf die Patenterteilung: **27.08.1997**
(21) Anmeldenummer: 93109423.9
(22) Anmeldetag: 12.06.1993
(51) Int. Cl.: B65H 19/12, B65H 67/06

(54) **Vorrichtung zum Handhaben von Bobinen aus Materialbahnen**
Device for handling bobbins of webs
Dispositif pour manipuler des bobines de bandes

(30) Priorität: 30.06.1992 DE 4221052
(43) Veröffentlichungstag der Anmeldung: 12.01.1994
(60) Teilanmeldung: 97101416.2
(73) Patentinhaber: Focke & Co. (GmbH & Co.), 27283 Verden (DE)
(72) Erfinder: Focke, Heinz, D-2810 Verden (DE); Gosebruch, Harald, Dr., D-2810 Verden (DE); Häfker, Thomas, D-2815 Etelsen (DE)
(74) Vertreter: Bolte, Erich, Dipl.-Ing.

(56) Entgegenhaltungen:
- EP-A- 0 188 787
- EP-A- 0 347 311
- EP-A- 0 393 780
- DE-A- 2 335 407
- DE-A- 3 408 171
- DE-A- 3 627 586
- FR-A- 2 548 948
- FR-A- 2 647 763
- GB-A- 651 022
- GB-A- 1 444 569
- US-A- 4 358 143

## Beschreibung

Die Erfindung betrifft eine Vorrichtung für die Handhabung von Bobinen aus bahnförmigem Material, insbesondere Verpackungsmaterial, nämlich zur Aufnahme, zum Transport und zur Übergabe an eine Verarbeitungsmaschine, insbesondere an eine Verpackungsmaschine, mit einem auf Rollen verfahrbaren Bobinenförderer, der an einem bewegbaren Fahrgestell einen Bobinenhalter für die Aufnahme einer Bobine aufweist, wobei der Bobinenförderer an mit Abstand oberhalb der Verarbeitungsmaschine verlaufenden Förderschienen verfahrbar ist - sogenannter Überkopfförderer.

In der gattungsgemäßen DE-A-34 25 734 ist eine Einrichtung gezeigt, mit der Bobinen einzeln einem Vorrat entnommen und entfernt liegenden Verarbeitungsmaschinen zuführbar sind. Ein entsprechender Bobinenförderer ist als Überkopfförderer an Schienen verfahrbar und weist einen Bobinenhalter nach dem Prinzip eines Gelenkarms auf. Am Ende des Gelenkarms ist ein Tragzapfen für Bobinen angeordnet.

Aus der DE-A-34 08 171 ist eine Transportvorrichtung bekannt, die einen Förderer zeigt, mit dem auf Wickelwellen gelagerte Rollen von einer Rollenschneidemaschine zu einer Waage oder einer Ablage förderbar sind. Der Förderer ist auf einem Portal, auf zwei zueinander parallel verlaufenden Schienen verfahrbar angeordnet. Der Halter zur Aufnahme der Rollen ist an zwei vertikal gerichteten Hubarmen aufgehängt und zum Aufnehmen und Abgeben des beförderten Gutes um eine horizontale Achse relativ zu den Hubarmen schwenkbar. Ein längerer Transport von Rollen oder Bobinen von einem Lager bzw. Magazin bis zu einer Verarbeitungsmaschine ist nicht möglich. Auch ist die bekannte Vorrichtung nicht zur zielgenauen und flexiblen Übergabe von Bobinen an eine Verarbeitungsmaschine geeignet.

Die FR-A-2 647 763 zeigt eine Palettiereinrichtung, bestehend aus einem auf vier Stelzen ruhenden Gestell und einem von drei abwärts gerichteten Teleskoparmen gehaltenen Saugheber für Packungen oder dergleichen. Der Transport von Bobinen ist mit dieser Einrichtung nicht ohne weiteres möglich.

Der Erfindung liegt die Aufgabe zugrunde, Maßnahmen für eine einfache, vollautomatische und exakte Handhabung von Bobinen im Zusammenhang mit der Aufnahme, dem Transport und der Übergabe derselben an eine Verpackungsmaschine vorzuschlagen.

Zur Lösung dieser Aufgabe ist die erfindungsgemäße Vorrichtung durch folgende Merkmale gekennzeichnet:
a) an der Unterseite des Fahrgestells sind abwärts gerichtete Elemente angeordnet, die an ihren unteren Enden den Bobinenhalter bzw. ein Haltegestell desselben tragen,
b) als Tragelemente sind drei längenveränderliche Stellorgane vorgesehen, die in nach oben zum Fahrgestell divergierender Relativstellung angeordnet sind,
c) die oberen Enden der Stellorgane sind jeweils gelenkig mit dem Fahrgestell und die unteren Enden ebenfalls gelenkig mit dem Bobinenhalter bzw. dem Haltegestell desselben verbunden,
d) die Stellorgane sind je unabhängig voneinander, das heißt individuell betätigbar.

Am Bobinenhalter ist ein Bobinentragorgan angeordnet, vorzugsweise ein Tragzapfen, der in eine bei Bobinen übliche Mittenöffnung eintritt und damit die Bobine erfaßt. Alternativ können aber auch Tragorgane zum Einsatz kommen, die die Bobinen an ihrem Außenumfang erfassen.

Bei einem bevorzugten Ausführungsbeispiel der Erfindung sind die drei den Bobinenhalter tragenden Stellorgane mit etwa gleichen Winkelabständen voneinander angeordnet.

Die Bobinentragorgane, nämlich die Tragzapfen, sind mit optoelektrischen Tastorganen ausgerüstet, die ein selbsttätiges exaktes Positionieren von Tragzapfen zu Tragzapfen oder von Tragzapfen in bezug auf die Mittenöffnung von Bobinen steuern. Bei diesen Tastorganen handelt es sich insbesondere um eine am freien Ende eines Tragzapfens angeordnete Kamera, die auf Gegenorgane anspricht. Bei der Aufnahme von Bobinen, beispielsweise von einer Palette, bewirkt die Kamera das exakte Einführen des Tragzapfens in die Mittenöffnung der Bobine. Diese kann mit durch die Kamera identifizierbaren Markierungen versehen sein, um die Art der Bobine bzw. des Verpackungsmaterials zu erkennen. Als vorteilhaftes Beispiel können die Kerne bzw. Hülsen der Bobinen für unterschiedliche Verpackungsmaterialien unterschiedlich gefärbt sein.

Weitere Einzelheiten der Erfindung werden nachfolgend anhand eines in den Zeichnungen dargestellten Ausführungsbeispiels näher erläutert. Es zeigt:
- Fig. 1: Eine Anlage mit mehreren Verarbeitungsmaschinen für Verpackungsmaterial und einem Fördersystem für dieses in schematisiertem Grundriß,

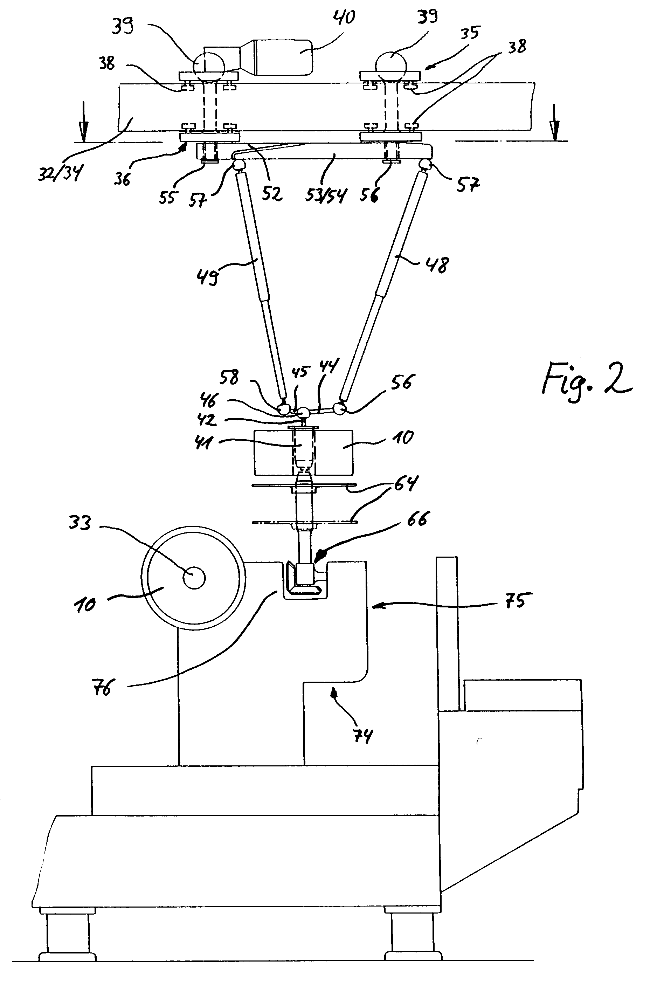

- Fig. 2: einen Bobinenförderer im Bereich einer Verpackungsmaschine in Seitenansicht,
- Fig. 3: eine Einzelheit des Bobinenförderers in einer gegenüber Fig. 2 um 90° versetzten Schnitt- bzw. Ansichtsebene im Bereich der Aufnahme einer Bobine,

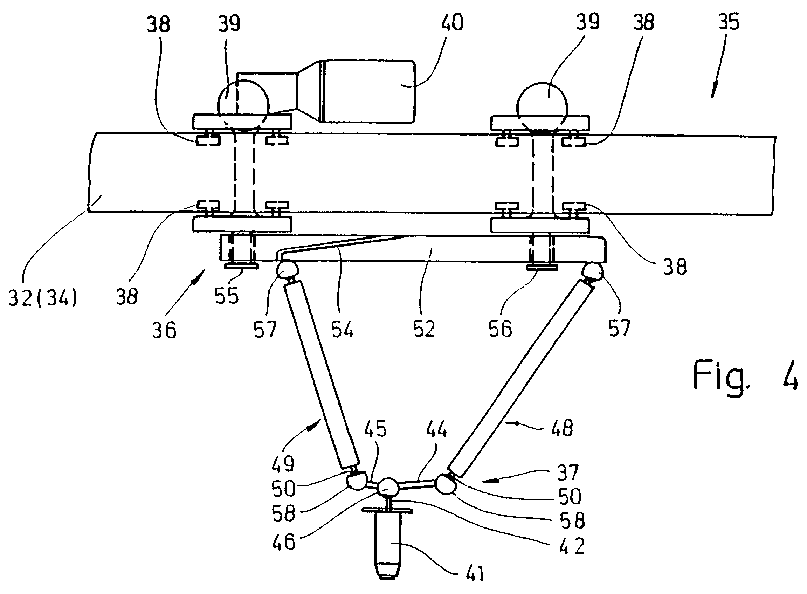

- Fig. 4: einen Bobinenförderer als Einzelheit in Seitenansicht,
- Fig. 5: einen Horizontalschnitt einer Einzelheit des Bobinenförderers in der Schnittebene V - V der Fig. 2,
- Fig. 6: eine Einzelheit des Bobinenförderers im Vertikalschnitt, in vergrößertem Maßstab,
- Fig. 7: die Lagerung eines Arbeitszapfens einer Verpackungsmaschine in Seitenansicht bzw. im Vertikalschnitt,
- Fig. 8: die Einzelheit gemäß Fig. 7 im Horizontalschnitt bei veränderter Relativstellung,
- Fig. 9: ein Tragzapfen als Einzelheit mit einem Teil eines Arbeitszapfens in vergrößertem Maßstab, teilweise geschnitten,

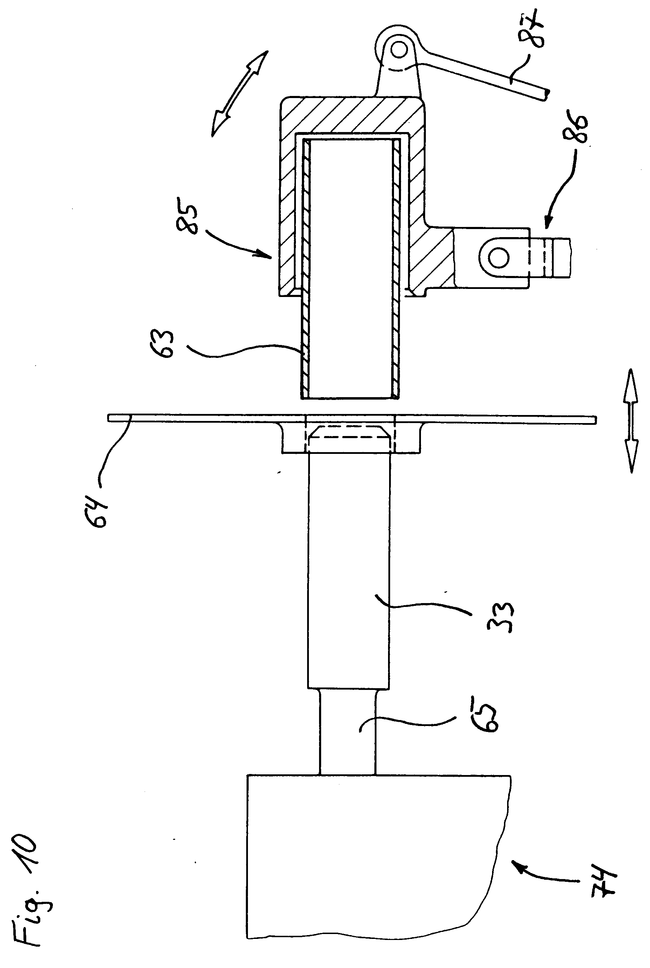

- Fig. 10: einen Hülsenhalter für eine Hülse einer leergefahrenen Bobine in Aufnahmeposition in Seitenansicht,

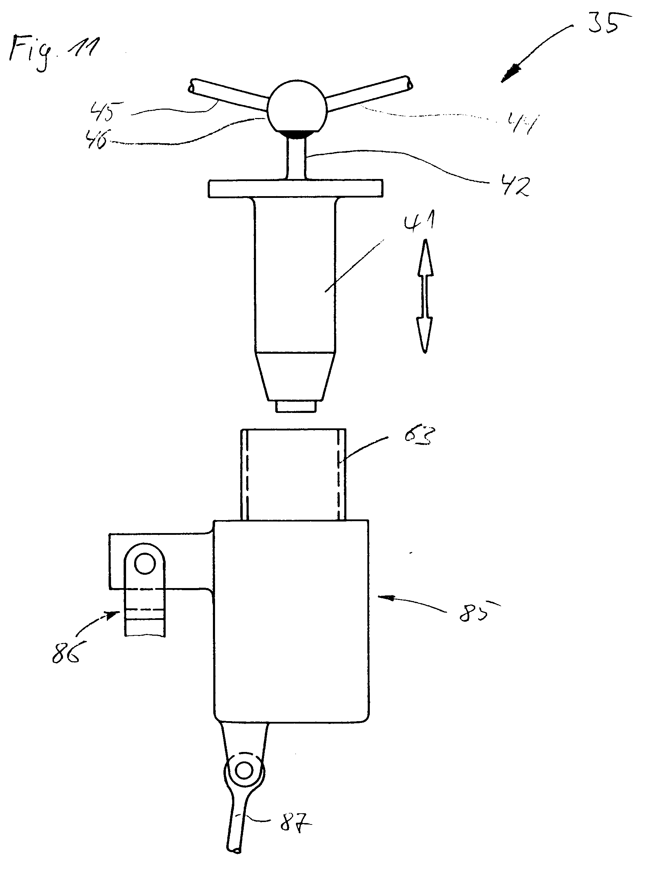

- Fig. 11: den Hülsenhalter gemäß Fig. 10 in Bereitstellungsposition, ebenfalls in Seitenansicht.

Bei dem gezeigten Ausführungsbeispiel geht es um die Handhabung von Bobinen 10 aus gewickeltem, bahnförmigem Material. Dabei handelt es sich in erster Linie um Verpackungsmaterial. Betroffen sind aber auch andere Materialien, z.B. Zigarettenpapier und Belagpapier für Zigarettenfilter. Die als gewickelte Bahn vorliegenden Bobinen 10 sind üblicherweise mit einer Mittenöffnung 11 versehen. In dieser befindet sich eine Hülse, auf die die Materialbahn gewickelt ist.

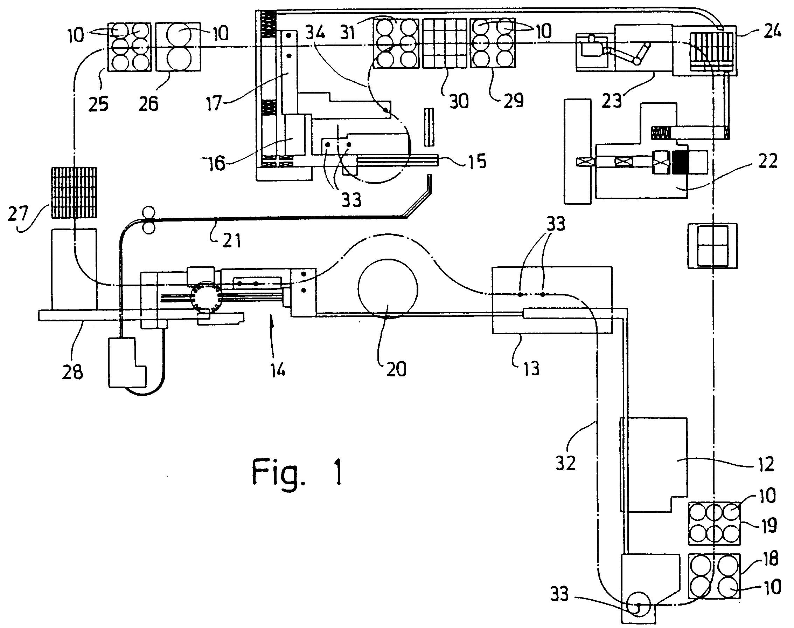

Fig. 1 zeigt im vereinfachten Grundriß eine Komplettanlage für die Herstellung und Verpackung von Zigaretten. Zu dieser Anlage gehört eine Zigaretten-Herstellmaschine 12, eine Filteransetzmaschine 13, eine Verpackungsmaschine 14, eine Folieneinschlagmaschine 15, ein Stangenpacker 16 und eine Stangenumhüllungsmaschine 17.

Die Zigaretten werden im Bereich der Zigaretten-Herstellmaschine 12 gefertigt. Dieser Maschine ist ein Zigarettenpapier-Speicher 18 zugeordnet. Des weiteren befindet sich in diesem Bereich ein Belagpapier-Speicher 19. Das Belagpapier wird im Bereich der Filteransetzmaschine 13 eingesetzt. Die hier fertiggestellten Zigaretten gelangen in einen Zigaretten-Speicher 20.

Aus dem Zigaretten-Speicher 20 werden die Zigaretten der (Zigaretten-)Verpackungsmaschine 14 zugeführt. Hier werden die Zigarettenpackungen hergestellt und über einen Packungsförderer 21 weiteren Verpackungsmaschinen zugeführt. Hierzu gehört die Folieneinschlagmaschine 15, die die äußere Umhüllung der Zigarettenpackung aus Folie anbringt. Der nachfolgende Stangenpacker 16 dient zur Herstellung von Packungsgebinden (Zigarettenstangen). Es folgt schließlich eine Stangenumhüllungsmaschine 17 zum Anbringen einer äußeren Umhüllung der Zigarettenstangen.

Die insoweit vertriebsfertige Zigaretten-Großpackung wird einem Kartonierer 22 zugeführt, in dessen Bereich die Gebindepackungen in Kartons eingefüllt werden. Anschließend folgt ein Palettierer 23 zum Beladen von Paletten 24 mit den Kartons.

Für die Verpackungsmaschine 14 wird bei der Herstellung von Zigarettenpackungen des Typs Klappschachtel (Hinge-Lid-Packung) unterschiedliches Verpackungsmaterial eingesetzt. Ein Stanniol-Speicher 25 und ein Kragen-Speicher 26 sind in einem größerem Abstand von der Verpackungsmaschine 14 angeordnet, jedoch in einem für die Raumausnutzung günstigen Bereich. Der Stanniol-Speicher 25 enthält bahnförmiges Verpackungsmaterial (Stanniol) als Innenumhüllung für den Packungsinhalt. Auch das Material zur Herstellung eines Kragens (dünner Karton) ist hier als Bobine 10 bereitgehalten im Kragen-Speicher 26. Ein Zuschnitt-Speicher 27 enthält anderweitig vorbereitete, nämlich gestanzte Zuschnitte für den genannten Packungstyp. Die Zuschnitte bzw. Zuschnittstapel werden auf einem gesonderten Zuschnittförderer 28 der Verpackungsmaschine 14 zugeführt.

Für die aus einer dünnen Kunststoffolie bestehende Außenumhüllung der einzelnen Packungen wird das Verpackungsmaterial im Bereich eines Folien-Speichers 29 bereitgehalten. Auch dieses Verpackungsmaterial liegt in Gestalt von Bobinen 10 vor. Für die Gebindeumhüllung dienen vorgefertigte Zuschnitte aus dünnem Karton im Bereich eines Stangen-Speichers 30. Schließlich ist ein weiterer Speicher, nämlich ein Außenfolien-Speicher 31 für das äußere Umhüllungsmaterial der Zigarettenstangen vorgesehen. Auch dieses Verpackungsmaterial liegt als Bobine 10 vor.

Zum Transport der Bobinen 10 von den geschilderten Bobinen-Speichern zu den Verarbeitungsmaschinen dient bei dem gezeigten Ausführungsbeispiel ein geschlossenes Transportsystem. Es handelt sich dabei um einen "Überkopfförderer" mit einer Förderbahn bzw. einer Förderschiene 32 oberhalb der Speicher und Maschinen. Die Förderschiene 32 ist hier als geschlossene Bahn so angeordnet, daß sie alle Speicher mit Verpackungsmaterial überfährt. Es kann also von jedem Speicher Verpackungsmaterial aufgenommen werden. Des weiteren ist jede der Verarbeitungsmaschinen so erfaßt, daß mindestens ein Arbeitszapfen 33, bei einzelnen Maschinen auch zwei Arbeitszapfen, beschickt werden können. Die Aufnahmen für das Verpackungsmaterial des Stangenpackers 16 und der Folieneinschlagmaschine 15 werden über eine bogen- bzw. S-förmige Abzweigung 34 der Förderschiene 32 erreicht. Die Abzweigung 34 überfährt als erstes eine Aufnahmevorrichtung für Stangenzuschnitte aus dem Stangen-Speicher 30. Danach führt die Abzweigung 34 zu den beiden Arbeitszapfen 33 der Folieneinschlagmaschine 15, um Bobinen aus dem Folien-Speicher 29 anzuliefern.

Der Transport der einzelnen Bobinen 10 erfolgt durch einen Bobinenförderer 35. Dieser besteht aus einem an der Förderschiene 32 bzw. der Abzweigung 34 verfahrbaren Fahrgestell 36 und einem Bobinenhalter 37. Letzterer dient zum Erfassen und Halten jeweils einer Bobine 10. Der Bobinenenförderer 35 ist mit um horizontale oder vertikale Achsen drehbaren Rollen 38, 39 an der Förderschiene 32 verfahrbar. Ein jedem Bobinenförderer 35 zugeordneter Motor 40 dient zum Antrieb.

An der Unterseite des Fahrgestells 36 ist der Bobinenhalter 37 höhenverstellbar und kippbar angebracht. Als Tragorgan zur Aufnahme der Bobine 10 dient ein Tragzapfen 41, der in die Mittenöffnung der Bobine 10 eingeführt wird. Der Bobinenhalter 37 ist mit dem Tragzapfen 41 auf- und abbewegbar sowie in queraxialer Richtung (bezogen auf den Tragzapfen 41) verstellbar. Der Tragzapfen 41 bleibt bei dieser Ausführungsform stets in vertikaler Stellung.

Der Tragzapfen 41 ist als Teil des Bobinenhalters 37 über ein Verbindungsstück 42 (kurze Stange) mit einem Haltegestell verbunden. Dieses besteht hier aus drei sternförmig unter gleichen Winkelabständen zueinander gerichteten Tragarmen 43, 44, 45. Diese sind in einem mittleren Knotenpunkt starr miteinander verbunden. Hier schließt unten das Verbindungsstück 42 an, und zwar über ein Kugelgelenk 46, dessen oberer, fester Teil mit dem Knotenpunkt der Tragarme 43, 44, 45 verbunden ist. Durch das Kugelgelenk 46 wird der Tragzapfen 41 stets selbsttätig, nämlich infolge des Eigengewichts, in der vertikalen Postion gehalten und mit dem Bobinenhalter auf- und abbewegt sowie queraxial verschoben.

Die Tragarme 43..45 werden von längenveränderlichen Tragelementen gehalten. Bei diesen handelt es sich um Druckmittelzylinder 47, 48, 49, und zwar in der Ausführung als langgestreckte, doppeltwirkende pneumatische Teleskopzylinder. Die Druckmittelzylinder 47..49 können dadurch einen langen Hubweg auf den Tragzapfen 41 übertragen.

Die ebenfalls sternförmig, nämlich in der Ebene der Tragarme 43..45, gerichteten Druckmittelzylinder 47..49 sind mit den oberen Enden mit dem Fahrgestell 36 des Bobinenförderers 35 verbunden. Das Fahrgestell 36 besteht zu diesem Zweck aus einer Traverse 52, die sich in Längs- bzw. Fahrtrichtung erstreckt und aus seitwärts gerichteten Auslegerarmen 53 und 54. Letztere sind unter einem Winkel zur Traverse 52 gerichtet. Es entsteht dadurch ein ebenfalls sternförmiges Tragwerk in den Ebenen der Tragarme 43..45. Mit Endbereichen ist die Traverse 52 über Tragbolzen 55, 56 mit einem Gestell der Rollen 38, 39 verbunden.

Jeder Druckmittelzylinder 47, 48, 49 ist individuell betätigbar, also ein- oder ausfahrbar. Dadurch ergeben sich unterschiedliche und an die jeweiligen Verhältnisse angepaßte Relativstellungen des Bobinenhalters 37 und damit des Tragzapfens 41. Um diese Stellungen zu ermöglichen, sind die Druckmittelzylinder 47..49 mit den oberen Enden über Kugelgelenke 57 mit dem Fahrgestell 36 und über weitere Kugelgelenke 58 mit den Tragarmen 43..45 verbunden. Die oberen Kugelgelenke 57 sitzen einerseits an einem Ende der Traverse 52 und zum anderen an den Enden der Auslegerarme 53, 54.

Zur Aufnahme einer Bobine 10 von einem der Speicher 18, 19; 25, 26; 29, 31 wird ein Bobinenförderer 35 über den jeweiligen Speicher gefahren. In dessen Bereich sind die Bobinen 10 mit aufrechter Mittenöffnung 11 gelagert. Der Tragzapfen 41 kann bei im wesentlichen aufrechter Positionierung von oben in die Mittenöffnung 11 einfahren. Um ungenaue Positionierungen der Bobinen auszugleichen, ist der Außendurchmesser des Tragzapfens 41 deutlich kleiner als der Durchmesser der Mittenöffnung 11 bzw. einer Hülse 77 der Bobine 10. Durch dieses beträchtliche Spiel können Ungenauigkeiten der Relativpositionen beim Einfädeln des Tragzapfens 41 ausgeglichen werden.

Der Tragzapfen 41 ist (in bekannter Weise) so ausgebildet, daß innerhalb der Mittenöffnung 11 Spannorgane 78 wirksam werden, die eine ausreichende Sicherung der Bobine 10 auf dem Tragzapfen 41 auch bei aufrechter Stellung gewährleisten. Die Spannorgane 78 sind in Radialrichtung bewegbar und beispielsweise hydraulisch, pneumatisch oder mechanisch betätigbar.

Die Bobine 10 kann bei in der Mittenöffnung 11 sitzendem Tragzapfen 41 vom Speicher abgehoben werden, und zwar durch entsprechendes Einfahren der Druckmittelzylinder 47..49. Im Bereich einer der beschriebenen Arbeitsmaschinen wird der Bobinenhalter 37 wieder abgesenkt. Bei dem vorliegenden Ausführungsbeispiel wird die Bobine 10 unmittelbar an einen Arbeitszapfen 33 der Verpackungsmaschine oder dergleichen übergeben. Der Arbeitszapfen 33 kann sich dabei in einer aufrechten Stellung befinden. Es ist aber auch möglich, bei entsprechender Position des Tragzapfens 41 die Bobine 10 auf einen horizontal gerichteten Arbeitszapfen 33 zu übergeben.

Durch die Organe (Druckmittelzylinder 47..49) zum Verstellen des Tragzapfens 41 ist eine uneingeschränkt selbsttätige Aufnahme und weitere Handhabung der Bobinen 10 möglich. Durch Tastorgane, insbesondere durch optoelektrische Sensoren oder Kameras wird der Tragzapfen 41 durch gezielte Verstellung der Druckmittelzylinder 47..49 selbsttätig auf die Mittenöffnung 11 ausgerichtet und sodann in diese eingefahren.

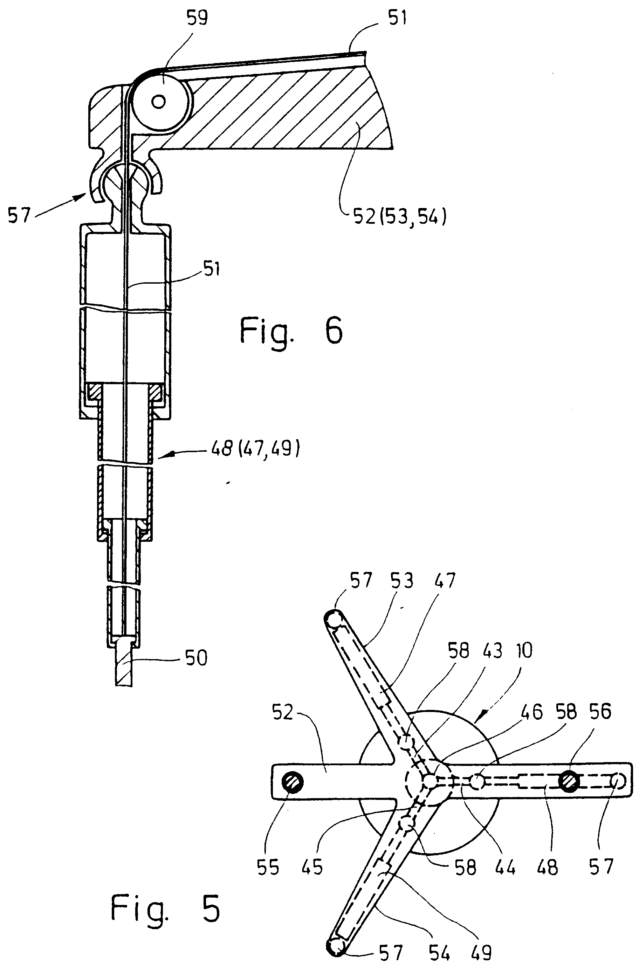

Für die im einzelnen nicht dargestellte Steuerung muß die Relativstellung der einzelnen Druckmittelzylinder 47..49 ständig exakt festgestellt und bei der Steuerung der Bewegungen berücksichtigt werden. Es geht dabei um die Ausfahrlänge der Druckmittelzylinder 47..49. Diese kann durch Meßorgane innerhalb der Druckmittelzylinder 47..49 auf der Basis von Ultraschall festgestellt werden, wobei eine untere, aus- und einfahrbare Kolbenstange 50 des Druckmittelzylinders 47..49 als Reflektionsfläche dient. In Fig. 6 ist eine Alternative dargestellt. Diese besteht darin, daß ein unterer, ausfahrbarer Teil des Druckmittelzylinders 47..49, nämlich die Kolbenstange 50, über ein mitbewegbares Meßorgan, im vorliegenden Falle mit einem (dünnen) Seil 51 verbunden ist. Dieses tritt am oberen Ende aus dem Druckmittelzylinder 47..49 aus und führt zu einer Meßeinrichtung. Das Auf- und Abwickeln des Seils 51 beim Aus- und Einfahren des Druckmittelzylinders 47..49 wird gemessen. Hieraus ergeben sich exakte Daten über die Ausfahrposition des jeweiligen Druckmittelzylinders 47..49. Das Seil 51 ist im vorliegenden Falle durch das Kugelgelenk 57 hindurchgeleitet. Es wird am Ende der Traverse 52 bzw. des Auslegearms 53, 54 über eine Umlenkrolle 59 geführt und gelangt dann zu einer nicht gezeigten Meßeinrichtung. Das Seil 51 - oder ein anderes, entsprechendes Zugorgan - kann auch als Organ zum Einfahren des Druckmittelzylinders 47, 48, 49 verwendet werden. In diesem Falle wird der Druckmittelzylinder durch das Druckmittel ausgefahren und durch das Zugorgan (Seil 51) eingezogen.

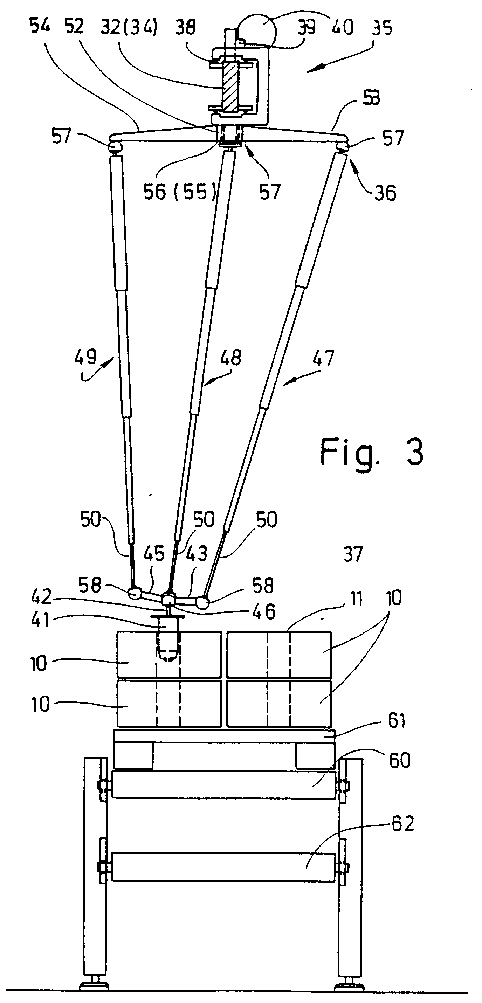

Fig. 3 zeigt eine der möglichen Positionen des Tragzapfens 41, bei der dieser aufgrund entsprechender Positionierung der Bobine 10 zur Mittelebene des Bobinenförderers 35 versetzt ist. Gleichwohl wird der Tragzapfen 41 in einer vertikalen Position in die Mittenöffnung 11 eingeführt. Die Vertikalstellung ergibt sich dabei durch das mittlere Kugelgelenk 46.

Fig. 3 zeigt auch ein Beispiel für die Ausbildung eines Speichers. Dieser besteht aus einem Endlosförderer 60. Mehrere Reihen (hier zwei) von übereinander gestapelten Bobinen 10 sind auf einer Palette 61 gelagert. Von dieser werden die Bobinen 10 nacheinander abgenommen. Durch die Lagerung der Bobinen 10 sind diese versetzt zu der durch den Endlosförderer 60 und den Bobinenförderer 35 gegebenen Mittelebene angeordnet.

Unterhalb des Endlosförderers 60 befindet sich ein Rückförderer 62 für die leeren Paletten 61.

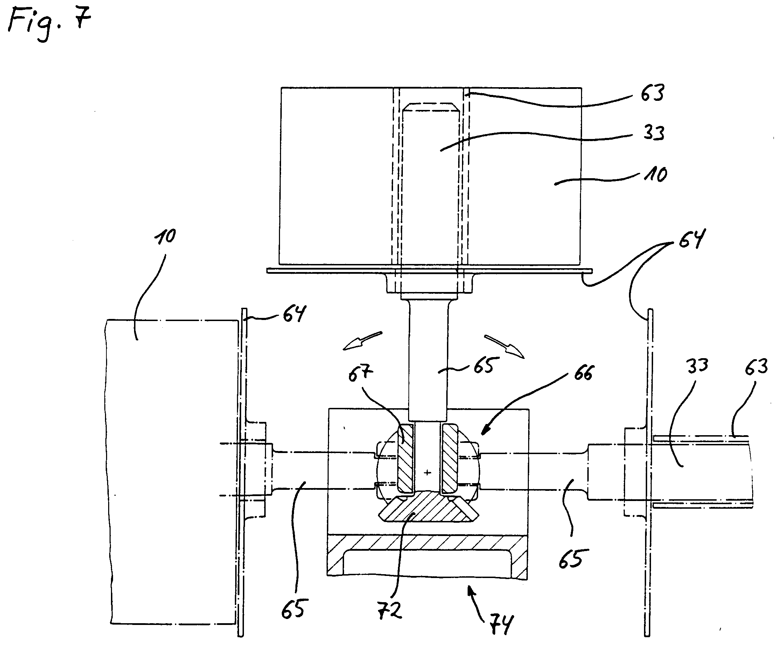

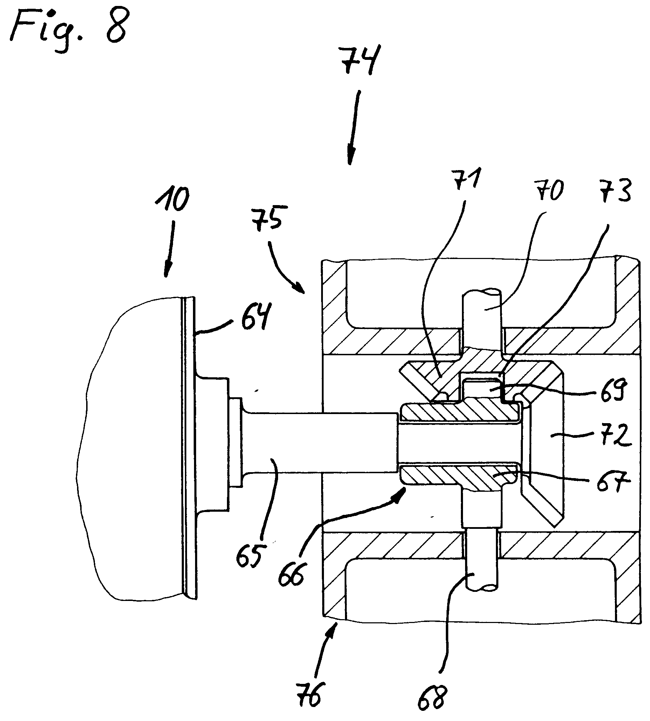

Eine weitere, eigenständige Besonderheit ist beispielshaft in Fig. 7 und Fig. 8 dargestellt. Der an der Verarbeitungsmaschine, insbesondere an einer Verpackungsmaschine, angeordnete Arbeitszapfen 33 ist schwenkbar gelagert. Wie insbesondere aus Fig. 7 ersichtlich, kann der Arbeitszapfen 33 aus einer aufrechten Position in eine horizontale Stellung bewegt werden. Die aufrechte Anordnung dient in erster Linie zur Aufnahme einer neuen, in der beschriebenen Weise angelieferten Bobine 10. Die horizontale Stellung dient als Arbeitsstellung, in der die Materialbahn von der Bobine 10 bzw. dem Arbeitszapfen 33 abgezogen und den Verarbeitungsorganen zugeführt wird.

Das Ausführungsbeispiel gemäß Fig. 7 ermöglicht zwei entgegengesetzt gerichtete horizontale Positionen. Die in Fig. 7 links gezeigte Stellung des Arbeitszapfens 33 ist die Arbeitsstellung. Gegenüberliegend, also rechts, kann eine die Mittenöffnung 11 begrenzende Hülse 63 der leergefahren Bobine 10 von dem Arbeitszapfen 33 abgestreift werden. Danach wird der Arbeitszapfen 33 wieder in die aufrechte Position geschwenkt, um eine neue Bobine 10 aufzunehmen. Der Arbeitszapfen 33 ist mit einer Anlagescheibe 64 (Bordscheibe) versehen, an der die Bobine 10 in der Arbeitsposition anliegt. Die Anlagescheibe 64 ist im vorliegenden Falle in Axialrichtung verschiebbar. Dadurch kann zum einen die Hülse 63 der leergefahrenen Bobine 10 in der beschriebenen Position von dem Arbeitszapfen 33 abgeschoben werden. Durch die in Axialrichtung hin- und herverschiebbare Anlagescheibe 64 ist aber eine weitere Besonderheit möglich. Beim Absetzen einer Bobine 10 auf einem (aufrechten) Arbeitszapfen 33 fährt die Anlagescheibe 64 zum freien (oberen) Ende des Arbeitszapfens 33 und dient so als Auflager für die Bobine 10 bei der Übergabe an den Arbeitszapfen 33. Die Anlagescheibe 64 wird dann in Axialrichtung zurück- bzw. abwärtsbewegt und führt dabei die Bobine in die korrekte Position auf dem Arbeitszapfen 33. Es wird dadurch eine Fallbewegung der Bobine 10 vermieden.

Beim Abschieben der Hülse 63 der leergefahrenen Bobine 10 wird diese in einen becherförmigen Hülsenhalter 85 geschoben. Der Hülsenhalter 85 ist in einem Schwenklager 86 schwenkbar gelagert und kann durch einen Schwenkhebel 87 geschwenkt werden. Zum Abschieben der Hülse 63 einer leergefahrenen Bobine 10 wird der Hülsenhalter 85 zunächst in eine horizontale Position geschwenkt und die Hülse 63 der leergefahrenen Bobine 10 sodann mittels der Anlagescheibe 64 vom Arbeitszapfen 33 abgeschoben und in den Hülsenhalter 85 eingeschoben. Der Hülsenhalter 85 wird dann in eine aufrechte Position geschwenkt. Die Hülse 63 einer leergefahrenen Bobine 10 wird von dem Tragzapfen 41 des Bobinenförderers 35 erfaßt und abgefördert.

Der Arbeitszapfen 33 ist auf der Rückseite der Anlagescheibe 64 mit einer axialen Verlängerung versehen, nämlich einem Schwenkzapfen 65. Dieser sitzt drehbar in einem Kipplager 66. Dieses besteht aus einer Lagerhülse 67, in der der Schwenkzapfen 65 mit einem Endbereich drehbar gelagert ist. An der Außenseite weist die Lagerhülse 67 auf der einen Seite eine Schwenkwelle 68 und auf der gegenüberliegenden Seite einen kurzen Lagerzapfen 69 auf. Über die Schwenkwelle 68, die mit einem im einzelnen nicht dargestellten Antrieb verbunden ist, kann die Kipp- bzw. Schwenkbewegung auf den Schwenkzapfen 65 übertragen werden. Der Lagerzapfen 69 bildet dabei eine Ausgleichsabstützung auf der zur Schwenkwelle 68 gegenüberliegenden Seite.

Das Kipplager 66 ist so ausgebildet, daß unabhängig von der Stellung des Arbeitszapfens 33 ein Drehantrieb auf diesen übertragen werden kann. Hierfür ist ein Winkelgetriebe vorgesehen. Auf der zur Schwenkwelle 68 gegenüberliegenden Seite ist eine Antriebswelle 70 angeordnet, die am Ende ein Kegelrad 71 aufweist. Dieses steht im Eingriff mit einem unter 90° hierzu gerichteten Kegelrad 72 am freien Ende des Schwenkzapfens 65. Der Drehantrieb wird demnach von der Antriebswelle 70 über 90° auf den den Schwenkzapfen 65 und damit auf den Arbeitszapfen 33 übertragen.

Das Kegelrad 71 ist mit einer Ausnehmung 73 versehen, die als Lager für den kurzen Lagerzapfen 69 dient.

Das so ausgebildete Getriebe ist in einem besonderen Maschinengestell 74 der Verpackungs- oder sonstigen Maschine untergebracht. Das Maschinengestell 74 hat eine U-förmige Gestalt mit aufrechten Tragschenkeln 75 und 76. Diese bestehen aus Hohlprofilen. In den einander zugekehrten Profilwänden sind die Schwenkwelle 68 einerseits und die Antriebswelle 70 andererseits gelagert. Das Getriebe ist zwischen den Tragschenkeln 75, 76 untergebracht, wobei sich durch das U-Profil ergebende seitliche Öffnungen die entgegengesetzten horizontalen Positionen des Arbeitszapfens 33 und des Schwenkzapfens 65 ebenso ermöglichen wie die nach oben gerichtete Position.

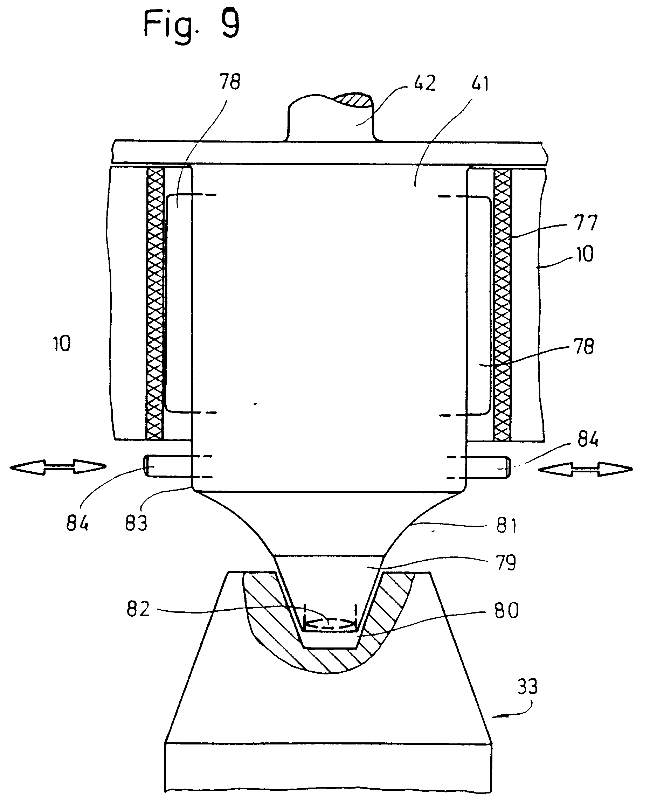

Für die exakte Übergabe der Bobine 10 vom Transportzapfen 41 auf den Arbeitszapfen 33 sind besondere Maßnahmen getroffen (Fig. 9). Diese gehen bei dem dargestellten Ausführungsbeispiel von einer aufrechten Position sowohl des Arbeitszapfens 33 wie auch des Tragzapfens 41 aus. Dieser ist am freien bzw. unteren Ende so ausgebildet, daß eine selbstjustierende bzw. zentrierende, formschlüssige Verbindung mit dem Arbeitszapfen 33 zur Übergabe der Bobine 10 erfolgen kann. Bei dem gezeigten Ausführungsbeispiel ist das freie Ende des Transportszapfens 41 mit einem Zentrierkegel 79 versehen. Dieser ist ein Kegelstumpf, der in eine entsprechend ausgebildete, kegelstumpfförmige Vertiefung 80 am freien Ende des Arbeitszapfens 33 passend eintritt. Die Vertiefung 80 ist mittig und in Axialrichtung verlaufend angeordnet. Der Zentrierkegel 79 hat deutlich kleinere Abmessungen als der Tragzapfen 41. Ein bogenförmig ausgebildetes Übergangsstück 81 ist zwischen dem Zentrierkegel 79 und dem eigentlichen, tragenden Teil des Tragzapfens 41 angeordnet.

Am unteren bzw. freien Ende des Tragzapfens 41 ist ein optoelektrisches Tastorgan 82 angeordnet. Bei dem vorliegenden Ausführungsbeispiel befindet sich das Tastorgan 82 im Bereich des Zentrierkegels 79. Das Tastorgan 82 bewirkt selbsttätig die exakte Positionierung des Tragzapfens. Im Bereich des Arbeitszapfens 33 kann ein korrespondierendes Tastorgan (Sender und Empfänger) angeordnet sein.

Ist das Tastorgan 82 als Kamera ausgebildet, kann mit deren Hilfe das selbsttätige Auffinden von Bobinen 10 im Bereich eines Vorrats, zum Beispiel auf einer Palette, gesteuert werden. Das Tastorgan 82 (Kamera) zentriert den Tragzapfen 41 auf die Mittenöffnung einer Bobine. Dabei kann die Kamera auch zur Identifizierung der Bobinen eingesetzt werden, wenn diese bei unterschiedlichen Verpackungsmaterialien von der Kamera aufzunehmende Merkmale aufweist. Als Beispiel kann die Hülse 77 eine besondere Farbe aufweisen, die einem bestimmten Verpackungsmaterial zugeordnet ist. Das Tastorgan 82 (Kamera) spricht auf Farben an und sucht selbsttätig die abgerufene Bobine 10 auf der Palette oder dergleichen.

Der Tragzapfen 41 ist weiterhin mit Organen zur Sicherung der Bobine 10 in der Transportposition versehen. Der Tragzapfen 41 ist zu diesem Zweck in Axialrichtung länger als die Abmessung der Bobine 10 in Axialrichtung. Ein Endstück 83 des Arbeitszapfens 41 ragt aus der Bobine 10 bzw. der Hülse 77 heraus. In diesem Bereich sind Sicherungsorgane angebracht, bei dem gezeigten Ausführungsbeispiel in Radialrichtung bewegbare Sicherungsstifte 84. Diese können zurückgezogen werden bis sie vollständig innerhalb des Profils des Tragzapfens 41 liegen. In der ausgefahrenen Stellung (Fig. 9) ragen sie bis in den Bereich der Bobine 10 bzw. der Hülse 77, so daß diese bei einem Versagen der Spannorgane 78 von den Sicherungsstiften 84 gehalten wird. Es können mehrere, z.B. drei oder vier derartiger Sicherungsstifte 84 längs des Umfangs des Tragzapfens 41 verteilt angeordnet sein.

Die Betätigung von Organen, die ganz oder teilweise innerhalb des (Trag-)Zapfens 41 angeordnet sind, erfolgt zweckmäßigerweise durch Druckmittel über entsprechende Zylinder bzw. zylinderartig ausgebildete Stellorgane. Ein geeignetes Beispiel ist in DE-A-40 24 284 in Fig. 6 und Fig. 7 dargestellt. Es werden dort Lösungen aufgezeigt für die Verstellbarkeit der Anlagescheibe 64 sowie der Spannorgane 78.

## Patentansprüche

1. Vorrichtung für die Handhabung von Bobinen aus bahnförmigem Material, insbesondere Verpackungsmaterial, nämlich zur Aufnahme, zum Transport und zur Übergabe an eine Verarbeitungsmaschine, insbesondere an eine Verpackungsmaschine, mit einem auf Rollen verfahrbaren Bobinenförderer (35), der an einem bewegbaren Fahrgestell (36) einen Bobinenhalter (37) für die Aufnahme einer Bobine (10) aufweist, wobei der Bobinenförderer (35) an mit Abstand oberhalb der Verarbeitungsmaschine verlaufenden Förderschienen (32) verfahrbar ist - sogenannter Überkopfförderer - , **gekennzeichnet** durch folgende Merkmale:
a) an der Unterseite des Fahrgestells (36) sind abwärts gerichtete Tragelemente angeordnet, die an ihren unteren Enden den Bobinenhalter (37) bzw. ein Haltegestell desselben tragen,
b) als Tragelemente sind drei längenveränderliche Stellorgane (46, 47, 48) vorgesehen, die in nach oben zum Fahrgestell (36) divergierender Relativstellung angeordnet sind,
c) die oberen Enden der Stellorgane (46, 47, 48) sind jeweils gelenkig mit dem Fahrgestell (36) und die unteren Enden ebenfalls gelenkig mit dem Bobinenhalter (37) bzw. dem Haltegestell desselben verbunden,
d) die Stellorgane (46, 47, 48) sind je unabhängig voneinander, das heißt individuell betätigbar.

2. Vorrichtung nach Anspruch 1, dadurch gekennzeichnet, daß der Bobinenhalter (37) einen in eine Mittenöffnung (11) der Bobine (10) einführbaren Tragzapfen (41) aufweist, der in vertikaler Relativstellung queraxial zum Bobinenförderer (35) verstellbar ist zur Ausrichtung auf die Mittenöffnung (11) einer Bobine (10) oder auf einen Arbeitszapfen (33) einer Verarbeitungsmaschine.

3. Vorrichtung nach Anspruch 1 oder 2, dadurch gekennzeichnet, daß die Stellorgane (47, 48, 49) unter gleichen Winkelabständen voneinander angeordnet und insbesondere als Druckmittelzylinder bzw. Teleskopzylinder ausgebildet sind.

4. Vorrichtung nach Anspruch 2 oder 3, dadurch gekennzeichnet, daß der Tragzapfen (41) derart am Bobinenhalter (37) angebracht ist, insbesondere durch ein Kugelgelenk (47), daß in jeder Stellung eine selbsttätige Ausrichtung des Tragzapfens (41) auf die Vertikalstellung gegeben ist.

5. Vorrichtung nach Anspruch 1 oder einem der weiteren Ansprüche, dadurch gekennzeichnet, daß die Stellorgane (47, 48, 49) über obere Kugelgelenke (57) mit dem Bobinenförderer (35) und über untere Kugelgelenke (58) mit dem Bobinenhalter (37) verbunden sind.

6. Vorrichtung nach Anspruch 1 oder einem der weiteren Ansprüche, dadurch gekennzeichnet, daß ein Stellorgan (48) mit einem oberen Ende in einer mittigen Längsebene des Bobinenförderers (35) mit dem Fahrgestell (36) desselben und die beiden weiteren Stellorgane (47, 49) mit seitlich abstehenden Auslegerarmen (53, 54) verbunden sind.

7. Vorrichtung nach Anspruch 2 oder einem der weiteren Ansprüche, dadurch gekennzeichnet, daß die unteren Enden der Stellorgane (47, 48, 49) mit einem Haltegestell verbunden sind, insbesondere mit drei unter gleichen Winkeln gerichteten Tragarmen (43, 44, 45), an deren Unterseite mittig der Tragzapfen (41) angeordnet ist, insbesondere mittels Kugelgelenk (46).

8. Vorrichtung nach Anspruch 1 oder einem der weiteren Ansprüche, dadurch gekennzeichnet, daß die Ausfahrlänge der Stellorgane (47, 48, 49) fortlaufend meßbar ist, insbesondere durch ein mit einer unteren Kolbenstange (50) eines jeden Druckmittelzylinders (47, 48, 49) verbundenes Meß-Seil (51) oder dergleichen, dessen Ausfahrlänge gemessen wird.

9. Vorrichtung nach Anspruch 2 oder einem der weiteren Ansprüche, dadurch gekennzeichnet, daß der Tragzapfen (41) und der die Bobine (10) aufnehmende Zapfen, insbesondere Arbeitszapfen (33), mit zueinander passenden, selbstjustierenden Enden ausgebildet sind, insbesondere mit einem Zentrierstück (79) einerseits und einer hierzu passenden Vertiefung (80) andererseits.

10. Vorrichtung nach Anspruch 2 oder einem der weiteren Ansprüche, dadurch gekennzeichnet, daß der Tragzapfen (41) am freien Ende ein verstellbares Halteorgan zum Sichern der sich auf dem Tragzapfen (41) befindenden Bobine aufweist, insbesondere queraxial bzw. radial bewegbare Sicherungsstifte (84), wobei der Tragzapfen (41) in Axialrichtung eine größere Länge aufweist, als die Axialabmessung der Bobine (10) und im Bereich eines so gebildeten Endstücks (83) die Sicherungsorgane angeordnet sind.

11. Vorrichtung nach Anspruch 2 oder einem der weiteren Ansprüche, dadurch gekennzeichnet, daß am freien Ende des Tragzapfens (41) Tastorgane, insbesondere optoelektrische Tastorgane (82) angeordnet sind zum Positionieren des Tragzapfens (41) in bezug auf eine Bobine (10) bzw. deren Mittenöffnung (11) oder in bezug auf einen Arbeitszapfen (33) einer Verpackungsmaschine oder dergleichen.

12. Vorrichtung nach Anspruch 11, dadurch gekennzeichnet, daß das am freien Ende des Tragzapfens (41) angeordnete Tastorgan (82) eine Kamera ist zum Erfassen von Markierungen auf den Bobinen (10), insbesondere von farbigen Markierungen auf den Hülsen (77).

13. Vorrichtung nach Anspruch 3 oder einem der weiteren Ansprüche, dadurch gekennzeichnet, daß die Teleskopzylinder (46, 47, 48) ein Zugorgan aufweisen, so daß die Teleskopzylinder durch ein Druckmittel ausgefahren und durch das Zugorgan eingezogen werden.

14. Vorrichtung nach Anspruch 1 oder einem der weiteren Ansprüche, dadurch gekennzeichnet, daß das Fahrgestell (36) ein sternförmiges Tragwerk für die Stellorgane (46, 47, 48) bildet, mit einer sich in Längsrichtung der Förderschienen (32) erstreckenden Traverse (52) und unter einem Winkel hierzu seitwärts gerichteten Auslegerarmen (53, 54).

## Claims

1. Apparatus for handling reels of material in webs, in particular packaging material, namely for receiving, for conveying and for transfer to a processing machine, in particular to a packaging machine, having a reel conveyor (35) which can be moved on rollers and has, on a movable chassis (36), a reel holder (37) for receiving a reel (10), the reel conveyor (35) being movable on conveying rails (32) which run with spacing above the processing machine - a so-called overhead conveyor, characterized by the following features:
a) bearing elements directed downwards are arranged on the underside of the chassis (36), which bear the reel holder (37) or a holding structure thereof at their lower ends,
b) three actuators (47, 48, 49) are provided as bearing elements, which can be varied in length and are arranged in a relative position diverging upwards to the chassis (36),
c) the upper ends of the actuators (47, 48, 49) are connected in each case in an articulated manner to the chassis (36), and the lower ends are likewise connected in an articulated manner to the reel holder (37) or the holding structure thereof,
d) the actuators (47, 48, 49) can each be actuated independently of one another, that is to say individually.

2. Apparatus according to Claim 1, characterized in that the reel holder (37) has a bearing journal (41) which can be introduced into a central opening (11) in the reel (10) and is displaceable in a vertical relative position transversely to the axis of the reel conveyor (35) for alignment with the central opening (11) in a reel (10) or with an operating journal (33) of a processing machine.

3. Apparatus according to Claim 1 or 2, characterized in that the actuators (47, 48, 49) are arranged at equal angular intervals from one another and are designed, in particular, as pressure-medium cylinders or telescopic cylinders.

4. Apparatus according to Claim 2 or 3, characterized in that the bearing journal (41) is mounted on the reel holder (37), in particular by means of a universal joint (46), in such a way that, in any position, automatic alignment of the bearing journal (41) to the vertical position is ensured.

5. Apparatus according to Claim 1 or one of the further claims, characterized in that the actuators (47, 48, 49) are connected to the reel conveyor (35) by means of upper universal joints (57) and to the reel holder (37) by means of lower universal joints (58).

6. Apparatus according to Claim 1 or one of the further claims, characterized in that one actuator (48) is connected by an upper end in a central longitudinal plane of the reel conveyor (35) to the chassis (36) thereof, and the other two actuators (47, 49) are connected to laterally projecting extension arms (53, 54).

7. Apparatus according to Claim 2 or one of the further claims, characterized in that the lower ends of the actuators (47, 48, 49) are connected to a holding structure, in particular to three bearing arms (43, 44, 45) which are disposed at equal angles and on the underside of which the bearing journal (41) is arranged centrally, in particular by means of the universal joint (46).

8. Apparatus according to Claim 1 or one of the further claims, characterized in that the extension length of the actuators (47, 48, 49) can be measured continuously, in particular by means of a measuring cable (51) or the like, which is connected to a lower piston rod (50) of each pressure-medium cylinder (47, 48, 49) and whose extension length is measured.

9. Apparatus according to Claim 2 or one of the further claims, characterized in that the bearing journal (41) and the journal which receives the reel (10), in particular the operating journal (33), are designed with mutually matching, self-adjusting ends, in particular with a centring piece (79), on the one hand, and a matching depression (8) on the other hand.

10. Apparatus according to Claim 2 or one of the further claims, characterized in that the bearing journal (41) has, at the free end, an adjustable holding member to secure the reel located on the bearing journal (41), in particular securing pins (84) which can be moved transversely to the axis or radially, the bearing journal (41) having a greater length in the axial direction than the axial dimension of the reel (10), and the securing members being arranged in the region of an end piece (83) thus formed.

11. Apparatus according to Claim 2 or one of the further claims, characterized in that scanning members, in particular optoelectrical scanning members (82), are arranged at the free end of the bearing journal (41) to position the bearing journal (41) in relation to a reel (10) or its central opening (11) or in relation to an operating journal (33) of a packaging machine or the like.

12. Apparatus according to Claim 11, characterized in that the scanning member (82) arranged at the free end of the bearing journal (41) is a camera to record markings on the reels (10), in particular colour markings on the tubes (77).

13. Apparatus according to Claim 3 or one of the further claims, characterized in that the telescopic cylinders (47, 48, 49) have a tension member, so that the telescopic cylinders are extended by a pressure medium and retracted by the tension member.

14. Apparatus according to Claim 1 or one of the further claims, characterized in that the chassis (36) forms a radial supporting structure for the actuators (47, 48, 49), having a cross member (52) extending in the longitudinal direction of the conveying rails (32) and laterally disposed extension arms (53, 54) at an angle thereto.

## Revendications

1. Dispositif de manipulation de bobines constituées d'un matériau sous forme de bande, en particulier d'un matériau d'emballage précisément pour la réception, le transport et la fourniture à une machine de transformation, en particulier à une machine d'emballage, avec un transporteur à bobines (35) déplaçable sur des rouleaux, et présentant, sur un bâti déplaçable (36) mobile, un support à bobines (37) destiné à supporter une bobine (10), le transporteur à bobines (35) étant déplaçable sur des glissières de transport (32) s'étendant à distance au-dessus de la machine de transformation - ce que l'on appelle un transporteur surélevé - caractérisé par les propriétés ci-après :
a) en face inférieure du bâti mobile (36) sont disposés des éléments support orientés vers le bas qui portent à leurs extrémités inférieures le support de bobines (37) ou un bâti support de celui-ci,
b) il est prévu trois organes de réglage (46, 47, 48) déplaçables en longueur, faisant office d'éléments support disposés dans une position relative allant en divergeant vers le haut par rapport au bâti mobile (36),
c) les extrémités supérieures des organes de réglage (46, 47, 48) sont chacune reliées de façon articulée au bâti mobile (36) et les extrémités inférieures sont également reliées de manière articulée aux supports de bobines (37), ou au bâti de maintien de celui-ci.
d) les organes de réglage (46, 47, 48) sont chacun susceptibles d'être actionnés indépendamment les uns des autres, c'est-à-dire individuellement.

2. Dispositif selon la revendication 1, caractérisé par le fait que le support de bobines (37) présente un tourillon support (41) pouvant être introduit dans une ouverture centrale (11) de la bobine (10), et déplaçable dans une position relative verticale, dans une direction axiale transversale par rapport au transporteur à bobines (35), en vue d'obtenir une orientation vis-à-vis de l'ouverture centrale (11) d'une bobine (10) ou d'un tourillon de travail (33) d'une machine de transformation.

3. Dispositif selon la revendication 1 ou la revendication 2, caractérisé par le fait que les organes de réglage (47, 48, 49) sont disposés avec des espacements angulaires identiques les uns par rapport aux autres et, en particulier, sont réalisés sous forme de cylindres à milieu sous pression ou vérins télescopiques.

4. Dispositif selon la revendication 2 ou la revendication 3, caractérisé par le fait que le tourillon support (41) est monté sur le support de bobines (37), en particulier au moyen d'une articulation sphérique (47), de manière qu'une orientation automatique du tourillon support (41) en positon verticale soit produite pour chaque position.

5. Dispositif selon la revendication 1 ou l'une des autres revendications, caractérisé par le fait que les organes de réglage (47, 48, 49) sont reliés, par l'intermédiaire d'articulations sphériques supérieures (57), au transporteur à bobines (35) et, par l'intermédiaire d'articulations sphériques inférieures (58), au support de bobines (37).

6. Dispositif selon la revendication 1 ou l'une des autres revendications, caractérisé par le fait qu'un organe de réglage (48) est relié à une extrémité supérieure, dans un plan longitudinal médian du transporteur à bobines (35), avec le bâti mobile (36) de celui-ci, et les deux autres organes de réglage (47, 49) sont reliés à des bras articulés (53, 54) faisant saillie latéralement.

7. Dispositif selon la revendication 2 ou l'une des autres revendications, caractérisé par le fait que les extrémités inférieures des organes de réglage (47, 48, 49) sont reliées à un bâti de maintien, en particulier à trois bras supports (43, 44, 45), orientés sous les mêmes angles et en face inférieure desquels est disposé centralement le tourillon support (41), en particulier au moyen d'une articulation sphérique (46).

8. Dispositif selon la revendication 1 ou l'une des autres revendications, caractérisé par le fait que la longueur de déploiement des organes de réglage (47, 48, 49) est mesurable de façon continue, en particulier au moyen d'un câble de mesure (51) ou analogue, relié à une tige de piston inférieure (50) de chaque cylindre de milieu sous pression (47, 48, 49), la longueur de déploiement du câble de mesure étant mesurée.

9. Dispositif selon la revendication 2 ou l'une des autres revendications, caractérisé par le fait que le tourillon support (41) et le tourillon recevant la bobine (10), en particulier le tourillon de travail (33), sont réalisés avec des extrémités s'adaptant les unes aux autres, à auto-ajustement, en particulier avec une pièce de centrage (79) d'une part, et un creusement (80), s'y adaptant, d'autre part.

10. Dispositif selon la revendication 2 ou l'une des autres revendications, caractérisé par le fait que le tourillon support (41) présente sur l'extrémité libre un organe de maintien réglable destiné à assurer la bobine se trouvant sur le tourillon support (41), en particulier des tiges de fixation (84) déplaçables en direction transversale à l'axe, ou radiale, le tourillon support (41) présentant dans la direction axiale une longueur supérieure à la valeur de la dimension axiale de la bobine (10), et les organes de fixation étant disposés dans la zone d'une pièce d'extrémité (83) ainsi constituée.

11. Dispositif selon la revendication 2 ou l'une des autres revendications, caractérisé par le fait qu'à l'extrémité libre du tourillon support (41) sont disposés des organes détecteurs, en particulier des organes détecteurs (82) optoélectriques, en vue de positionner le tourillon support (41) par rapport à une bobine (10), respectivement à son ouverture centrale (11), ou bien par rapport à un tourillon de travail (33) d'une machine d'emballage ou analogue.

12. Dispositif selon la revendication 11, caractérisé par le fait que l'organe détecteur (82), disposé à l'extrémité libre du tourillon support (41), est une caméra, destinée à appréhender des marquages placés sur les bobines (10), en particulier des marquages en couleur prévus sur les douilles (77).

13. Dispositif selon la revendication 3 ou l'une des autres revendications, caractérisé par le fait que les cylindres télescopiques (46, 47, 48) présentent un organe de traction, de manière que les verins télescopiques soient déployés par un milieu sous pression et rétractés par l'organe de traction.

14. Dispositif selon la revendication 1 ou l'une des autres revendications, caractérisé par le fait que le bâti mobile (36) constitue un système porteur en forme d'étoile destiné aux organes de réglage (46, 47, 48), avec une traverse (52) s'étendant dans la direction longitudinale des glissières de transfert (32), et des bras articulés (53, 54) orientés latéralement, sous un certain angle, par rapport à la traverse.
